# EUROPÄISCHE PATENTSCHRIFT

(11) **EP 3 323 717 B1**
(45) Veröffentlichungstag und Bekanntmachung des Hinweises auf die Patenterteilung: **13.05.2020**
(21) Anmeldenummer: 17199550.9
(22) Anmeldetag: 01.11.2017
(51) Int. Cl.: B64C 27/12, F16H 1/02

(54) **ROTORMAST**
ROTOR MAST
MÂT ROTOR

(30) Priorität: 21.11.2016 CH 15352016
(43) Veröffentlichungstag der Anmeldung: 23.05.2018
(73) Patentinhaber: kopter group ag, 8753 Mollis (CH)
(72) Erfinder: KÖSTLI, Roman, 8342 Wernetshausen (CH); STUCKI, Martin, 8330 Pfäffikon (CH)
(74) Vertreter: Schneider Feldmann AG Patent- und Markenanwälte

(56) Entgegenhaltungen:
- EP-A1- 2 610 525
- WO-A1-98/16762
- CH-A- 256 401
- DE-A1- 19 756 967
- DE-A1- 19 841 853
- DE-T2- 60 123 425
- US-A- 4 251 987

## Beschreibung

### Technisches Gebiet

Die vorliegende Erfindung beschreibt einen Rotormast eines Drehflüglers, insbesondere eines Helikopters, sowie die Kopplung des Rotormasts mit einem Helikopterrotorgetriebe.

### Stand der Technik

Im Bereich Helikopterbau wird der Hauptrotor in der Regel über einen mit dem Hauptrotor gekoppelten Rotormast mit einem Helikopterrotorgetriebe, üblicherweise in Form eines Planetengetriebes angetrieben, gekoppelt. Der Rotormast eines Helikopters kann aufgrund seiner Funktion als Antriebswelle für den Hauptrotor aufgefasst werden.

Beim Helikoptertyp "Eurocopter AS 350" ist der Rotormast beispielsweise gekoppelt mit einem ein Planetengetriebe umfassenden Helikoptergetriebe, indem der Rotormast in einem zentralen Aufnahmebereich des Helikoptergetriebes drehfest fixierbar ist. Ein solches Helikoptergetriebe ist wiederum in einem Getriebegehäuse untergebracht. Das Getriebegehäuse ist an mehreren Stellen an der Tragstruktur des Helikopters befestigt und an einen Rotor gekoppelt.

Beim "Eurocopter AS 350" weist das Planetengetriebe eine Mehrzahl von aussenverzahnten Planetenrädern auf, welche auf zugehörigen Planetenträgern lagern. Die Planetenräder sind konstruktionsbedingt in einem örtlich fixierten Zahnradring, in Form eines innenverzahnten Hohlrades, rotierbar um sich selbst und innerhalb des Hohlrades gelagert. Dabei rotieren die Planetenräder jeweils um ihre Planetenachse und drehen beziehungsweise umlaufen gleichzeitig innerhalb des Zahnradringes eine zentrale Rotormastachse. Die Rotation der Planetenräder erfolgt durch rotativen Antrieb eines zentralen Sonnenrades, welches ebenfalls örtlich fixiert, aber rotierbar um die zentrale Rotormastachse gelagert ist. Ein Antrieb dreht das zentrale Sonnenrad, sodass die Rotationsbewegung über das Sonnenrad und die Planetenräder über eine mit den Planetenrädern drehfest verbundene, als Kraftübertragungseinrichtung wirkende Planetenträger auf den wiederum drehfest mit dem Planetenträger verbundenen Rotormast übertragen wird, wobei der Rotormast von der, der Antriebsstrangseite abgewandten Seite des Getriebegehäuses wegragt.

Dies entspricht einer kompakten, leichten, ausreichend leistungsfähigen und robusten Anordnung eines von einem Helikopterrotorgetriebe angetriebenen Rotormasts.

Ein grundsätzliche Problematik solcher bekannter, derartig ausgestalteter und in einem Helikopter angeordneter Rotormasten ist die Gewährleistung eines laufruhigen Betriebs.

Aus den Dokumenten CH 256 401 A, DE 198 41 853 A1 und WO 98/16762 A1 sind weitere, anhand eines Helikopterrotorgetriebes angetriebene Rotormasten bekannt.

### Darstellung der Erfindung

Die vorliegende Erfindung hat sich zur Aufgabe gestellt einen Rotormast für einen Drehflügler, insbesondere für einen Helikopter, zu schaffen, welcher einen besonders laufruhigen Betrieb erlaubt.

Dies wird mit einem Rotormast gemäss Patentanspruch 1 gelöst, wobei durch die zweiteilige Ausgestaltung des Rotormasts ein besonders laufruhiger Antrieb eines Hauptrotors erzielbar ist.

Im Weiteren wurde vorteilhaft gefunden, dass während des Antriebs des Hauptrotors beim erfindungsgemässen, zweiteiligen Rotormast eine geringere Umlaufbiegung und dadurch eine geringere Ermüdung auftritt als bei den bekannten einteiligen Rotormasten wie beispielsweise beim bekannten "Eurocopter AS 350".

Zusätzlich konnte eine äusserst kompakte Anordnung anhand des erfindungsgemässen, zweiteiligen Rotormasts erreicht werden, welcher die Durchführung von Verkabelungen, Steuerstangen und weiteren Bauteilen von der Antriebsstrangseite zur Rotorseite wie nachfolgend erläutert erlaubt.

Weitere vorteilhafte Ausgestaltungsformen sind in den abhängigen Patentansprüchen angegeben.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt einen Längsschnitt eines in einem Helikopterrotorgetriebe montierten, erfindungsgemässen, zweiteiligen Rotormasts.
- Figur 2: zeigt eine schematische Ansicht des Helikoptergetriebes bei entferntem Getriebegehäuse nach Montage auf dem Lagermast, vor der Montage eines Zahnradringmitnehmers.
- Figur 3: zeigt einen Längsschnitt durch das Helikopterrotorgetriebe, wobei das Getriebegehäuse und der Gehäusedeckel rotormastseitig weggelassen wurde.
- Figur 4: zeigt eine Schnittansicht durch den rotormastseitigen Teil des Helikoptergetriebes mit Detailansicht des Zahnradmitnehmers und der Befestigung am rotierbaren Aussenmast des Rotormasts.
- Figur 5a: zeigt eine perspektivische Ansicht des Zahnradmitnehmers mit Kreuzverzahnung, während
- Figur 5b: eine perspektivische Ansicht des Aussenmast/Zahnradringflansches mit Kreuzverzahnung zeigt.
- Figur 6: zeigt einen Längsschnitt durch eine weitere bevorzugte Ausführungsform des erfindungsgemässen, zweiteiligen Rotormasts in montiertem Zustand.

### Beschreibung

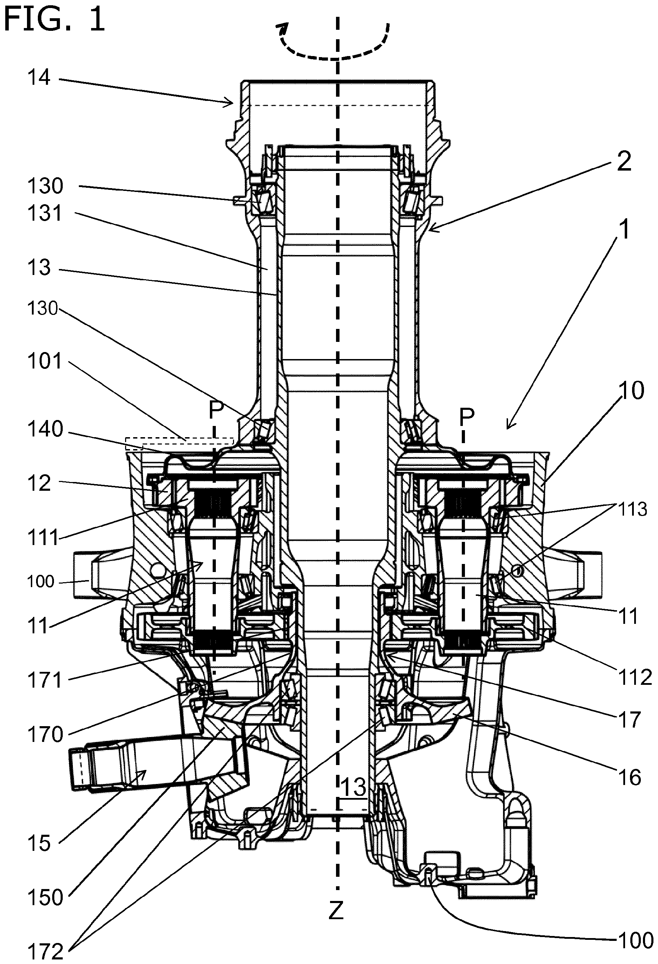

Im Folgenden wird in Fig.1 ein Helikopterrotorgetriebe 1 mit einem darin montierten, zweiteilig ausgestalteten Rotormast 2 beschrieben, wobei das mit dem Rotormast 2 gekoppelte Helikopterrotorgetriebe 1 in Form eines Planetengetriebes ausgeführt ist und für den Antrieb eines Hauptrotors oder eines Heckrotors einsetzbar ist. Das Helikopterrotorgetriebe 1 wird von einem Getriebegehäuse 10 umschlossen, womit die verschiedenen Bauteile geschützt vor äusseren Einflüssen gehalten werden. Mittels mindestens einer Getriebegehäusebefestigung 100 ist das Getriebegehäuse 10 an einer nicht dargestellten Helikoptertragstuktur befestigbar. Das Getriebegehäuse 10 ist mit einem Gehäusedeckel 101 abgeschlossen, welcher hier gestrichelt schematisch angedeutet ist.

Der in Fig.1 gezeigte, zweiteilig ausgestaltete Rotormast 2 umfasst einen Lagermast 13 sowie einen als Hohlkörper ausgestalteten Aussenmast 14, wobei der Aussenmast 14 den Lagermast 13 konzentrisch umgibt. Das Helikopterrotorgetriebe 1 weist einen zentralen Hohlraum auf. In diesem zentralen Hohlraum ist der ortsfeste und drehfeste Lagermast 13 gelagert, welcher hier als Hohlkörper eine zentrische Achse Z umschliessend gestaltet ist. Die zentrische Achse Z bildet gleichzeitig die Längsrichtung des Lagermastes 13 und eine Rotationsachse des rotierbar um diese zentrische Achse Z relativ zum Lagermast 13 gelagerten Aussenmastes 14, wobei die zentrische Achse Z auch als Rotormastachse bezeichnet wird. Wie in Fig.1 ersichtlich ist der rotierbare Aussenmast 14 des Rotormasts 2 mit dem Helikopterrotorgetriebe 1 gekoppelt und steht dadurch in Wirkverbindung.

Der Lagermast 13 kann unterschiedlich lang in Längsrichtung entlang der zentrischen Achse Z verlaufend ausgestaltet sein, wobei er mindestens teilweise durch das Zentrum des Getriebegehäuses 10 verläuft. Der Lagermast 13 kann dabei mit geeigneten Fixiermitteln versehen sein, um im zentralen Hohlraum des Helikopterrotorgetriebes 1 örtlich fixiert und drehgesichert angeordnet zu werden. Hier in Fig.1 ist der Lagermast 13 das Getriebegehäuse 10 vollständig querend ausgestaltet, wobei durch den zentrischen Hohlraum im Lagermast 13 beispielsweise nicht dargestellte Steuerstangen oder elektrische Leitungen wie Kabel oder dergleichen durchführbar sind. Durch eine solche Verlagerung in den Lagermast 13 können im Gegensatz zu einer Anordnung ausserhalb des Rotormasts 2 die Steuerstangen oder Kabel durch äussere Einflüsse wie Vogelschlag etc. nicht beschädigt werden.

Wie im Weiteren in Fig.1 ersichtlich ist hier der Lagermast 13 von der Rotorseite in Richtung Antriebsstrangseite verjüngend ausgestaltet, wodurch der Lagermast 13 von der Rotorseite her in den zentrischen Hohlraum des Getriebegehäuses 10 eingelassen und im Getriebegehäuse 10 befestigt werden kann.

Am Lagermast 13 ist ein als Antriebseinheit fungierendes Antriebszahnrad 16 drehbar gelagert, wobei das Antriebszahnrad 16 hier eine Kegelradverzahnung mit einer Schrägverzahnung aufweist, welche mit mindestens einem Antriebsstrangzahnrad 150 mindestens eines Antriebsstranges 15 zusammenwirken kann. Alternativ zu einer Schrägverzahnung kann das Antriebszahnrad eine Spiralverzahnung aufweisen. Mit dem Antriebszahnrad 16 ist ein als Hohlwelle ausgebildetes Sonnenrad 17 verbunden, welches einen Rohrabschnitt 170 mit einer beispielsweise gerade verzahnten Aussenverzahnung 171 aufweist. Durch das Sonnenrad 17 ist das Antriebszahnrad 16 rotierbar um die zentrische Achse Z auf den örtlich und rotativ fixierten Lagermast 13 aufgesteckt gelagert. Der Sonnenrad 17 ist - wie hier in Fig.1 gezeigt - auf zwei Sonnenradlagern 172 rotierbar auf dem beziehungsweise um den Lagermast 13 gelagert. Durch den Antriebsstrang 15 ist das Sonnenrad 17 antreibbar, wodurch das Sonnenrad 17 eine treibende Hohlwelle darstellt.

Auf Höhe der Aussenverzahnung 171 des Sonnenrads 17 ist eine Mehrzahl von Antriebsplanetenrädern 112 auf zugehörigen Planetenradträgern 11 beispielsweise mittels einer Keilverzahnung angeordnet, wobei die Planetenradträger als Planetenwellen aufgefasst werden können. Die Antriebsplanetenräder 112 weisen jeweils eine Aussenverzahnung auf und sind mit der Aussenverzahnung 171 des Sonnenrads 17 in Eingriff.

Die Planetenradträger 11 sind ortsfest ausgestaltet und weisen einen Abstand zum Getriebegehäuse 10 bzw. zur zentrischen Achse Z bzw. zum rotierbaren Sonnenrad 17 auf, dass die Antriebsplanetenräder 112 und ihre Planetenradträger 11 in eine ortsfeste Rotation innerhalb des Getriebegehäuses 10 versetzt werden können. Damit eine möglichst reibungsfreie Rotation der Planetenradträger 11 erreicht wird, sind mindestens zwei Planetenradträgerlager 113 in Richtung einer Planetenradachse P beabstandet zwischen den Wänden des Getriebegehäuses 10 und den Planetenradträgern 11 angeordnet.

Die Planetenradträger 11 sind als Doppelplanetenradträger ausgestaltet, da zu jedem Antriebsplanetenrad 112 in Richtung Planetenradachse P beabstandet ein Planetenrad 111 an jedem Planetenradträger 11 angeordnet ist. Die Antriebsplanetenräder 112 sind jeweils parallel zu den zugehörigen Planetenrädern 111 angeordnet. Die Mehrzahl Planetenradträger 11 ist um die zentrische Achse Z, um den äusseren Umfang des Lagermastes 13 verteilt und ortsfest im Getriebegehäuse 10 angeordnet. Die Planetenräder 111 bzw. die Antriebsplanetenräder 112 aller Planetenradträger 11 haben dabei ausreichend Spiel zu den Wänden des Getriebegehäuses 10 und zum orts- und drehfesten Lagermast 13. Damit ist eine ungestörte Rotation der Planetenradträger 11 und damit der Planetenräder 111, jeweils um ihre Planetenradachsen P möglich.

Das hier gezeigte Helikopterrotorgetriebe 1 kann als ein zweistufiges Planetengetriebe aufgefasst werden, weshalb gemäss dem erfindungsgemässen Helikopterrotorgetriebe 1 eine um den örtlich fixierten und drehgesicherten Lagermast 13 rotierbar gelagerte Hohlwelle als Sonnenrad 17 fungiert. Der Lagermast 13 quert hier das Getriebegehäuse 10 vollständig und ragt aus dem Getriebegehäuse 10 auf der dem Antriebsstrang 15 abgewandten Seite heraus.

Auf Höhe der Planetenräder 111 in Richtung zentrischer Achse Z ist ein Zahnradring 12 rotierbar um die zentrische Achse Z angeordnet. Der Zahnradring 12 umschliesst alle Planetenräder 111, ist durch die Rotation der Planetenräder 111 antreibbar und ist damit um die Planetenräder 111, die zentrische Achse Z und gemäss der gezeigten Ausführungsform, den äusseren Umfang des Lagermasten 13 umschliessend rotierbar.

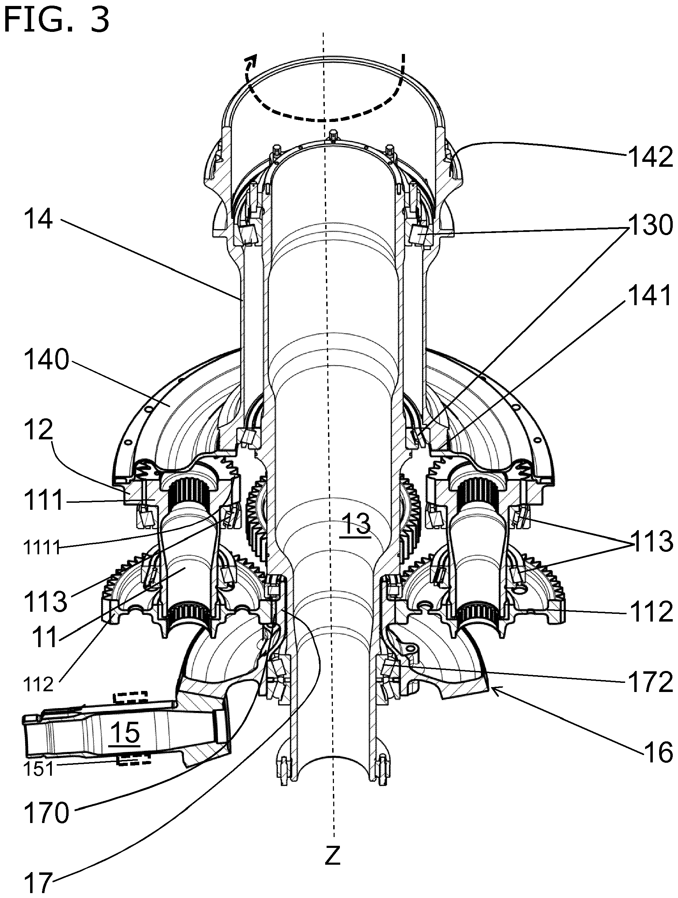

Am Zahnradring 12 ist ein als Kraftübertragungseinrichtung wirkender vorzugsweise gemäss Fig.3 als ringförmiges Bauteil ausgebildeter Zahnradringmitnehmer 140 angeordnet, mittels welchem die Rotation des Zahnradringes 12 auf den drehbaren Aussenmast 14 übertragbar ist. Der Gehäusedeckel 101 schliesst das Getriebegehäuse 10 den Zahnradringmitnehmer 140 umhüllend ab. Der Gehäusedeckel 101 ist dazu am Getriebegehäuse 10 befestigt und ragt bis kurz vor den rotierbaren Aussenmast 14. Damit ist der Gehäusedeckel 101 rotormastseitig nicht befestigt, sodass der Aussenmast 14 problemlos rotierbar ist.

Der Aussenmast 14 ist rohrförmig ausgebildet und hier über den, aus dem Getriebegehäuse 10 herausragenden Teil des Lagermasts 13, gestülpt konzentrisch ausgerichtet rotierbar gelagert. Damit fluchten die Längsachsen beider Masten 13, 14, wobei nur der Aussenmast um die Achse Z rotiert.

Der Aussenmast 14 ist als Hohlwelle ausgebildet und bildet eine Antriebswelle, welche indirekt mittels Helikopterrotorgetriebe 1 durch den Antriebsstrang 15 antreibbar ist. An der vom Helikoptergetriebe 1 entgegengesetzten Seite des Aussenmastes 14 wird ein Rotorkopf, umfassend mehrere Rotorblätter befestigt. Zur Lagerung des Aussenmastes 14 sind weitere Lager 130 zwischen Lagermast 13 und Aussenmast 14 vorgesehen, hier im Verlauf der zentrischen Achse Z zwei voneinander beabstandete Lager 130. Zwischen Lagermast 13 und Rotormast 14 kann optional ein Hohlraum 131 ausgebildet sein, in welchen beispielsweise ein Rohr zum Fördern von Schmieröl für die Lager 130 angeordnet werden kann.

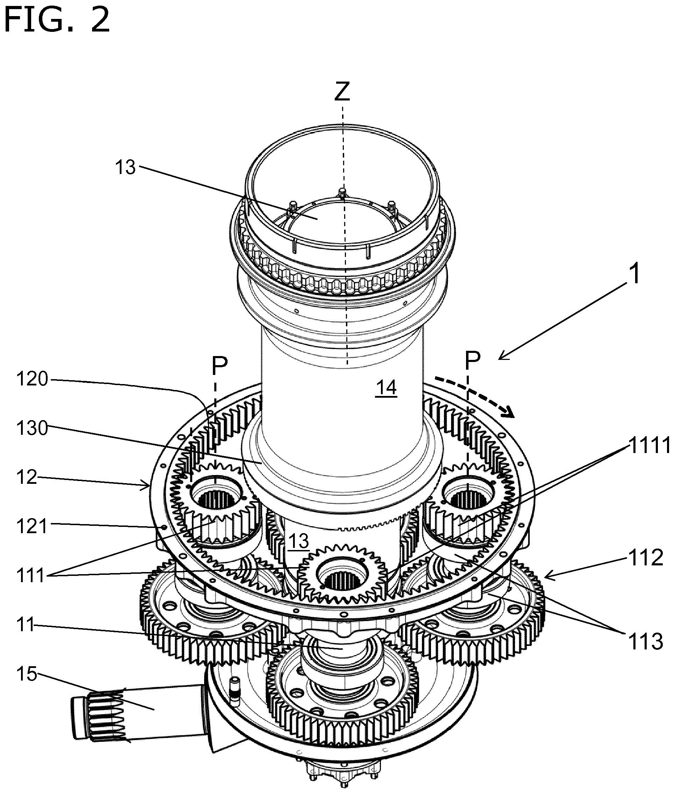

In Figur 2 ist die Rotation des Zahnradringes 12 um die Aussenkonturen der Planetenräder 111 mit dem Pfeil oben im Bild angedeutet. Während die Planetenräder 111 und die Planetenradträger 11 ortsfest rotieren, läuft der Zahnradring 12 um die zentrische Achse Z. Am Zahnradring 12 ist eine Innenverzahnung 120 angeordnet, welche mit einer Aussenverzahnung 1111 aller Planetenräder 111 in Eingriff ist. Der Zahnradring 12 rotiert in dieser Ausführungsform, sodass die Planeteräder 111 ortsfest gelagert sind. Durch Befestigungsmittel 121, beispielsweise Durchgangslöcher oder Gewindelöcher und passende Schrauben, kann der Zahnradmitnehmer 140 am rotierenden Zahnradring 12 befestigt werden. Die Befestigungsmittel 121 sind hier auf einer in Richtung der zentrischen Achse Z weisenden Fläche, vom Lagermast 13 beabstandet, entlang des Umfangs verteilt angeordnet. Ein Lager 130 zwischen Lagermast 13 und dem nicht dargestellten Aussenmast 14 ist den fixierten Lagermast 13 umgebend dargestellt.

Der Längsschnitt durch das Helikoptergetriebe 1 samt Lagermast 13 und Aussenmast 14 gemäss Figur 3 erlaubt bei entferntem Gehäusedeckel 101 einen Einblick in die Ausgestaltung des Zahnradringmitnehmers 140 und die Verbindung zum Aussenmast 14. Der Zahnradringmitnehmer 140 ist haubenartig ausgebildet, wodurch eine Berührung des Zahnradringmitnehmers 140 mit den Planetenrädern 111 ausgeschlossen ist. Der Zahnradringmitnehmer 140 ist auf einer Seite mit dem Zahnradring 12 und auf der, der zentrischen Achse Z zugewandten Seite mit dem Aussenmast 14 verbunden. Die Ausgestaltung des Zahnradringmitnehmers 140 sollte möglichst leicht aber ausreichend stabil erfolgen, entsprechend bildet hier ein ringförmiges, haubenartiges beziehungsweise haubenförmiges Bauteil aus Stahl, Titan oder dergleichen mit einer Wandstärke von vorzugsweise 2 bis 12 mm, noch bevorzugter 3 bis 8 mm mit diesen Eigenschaften den Zahnradringmitnehmer 140.

Durch den Antriebsstrang 15, welcher mittels Antriebsstranglager 151 gelagert ist, wird das Antriebszahnrad 16 rotiert. Durch die resultierende Rotation des mit dem Antriebszahnrad 16 verbundenen Sonnenrads 17 und der damit verbundenen Aussenverzahnung 171 wird die Rotation auf die Antriebsplanetenräder 112 und damit die Planetenräder 111 übertragen, wobei dies als erste Stufe des vorliegenden zweistufigen Planetengetriebes aufgefasst werden kann. Die Planetenräder 111 übertragen dabei in einer zweiten Stufe die Kräfte auf die Innenverzahnung 120 des Zahnradringes 12 und die dadurch resultierende Rotation des Zahnradringes 12 um die zentrische Achse Z wird mittels Zahnradringmitnehmer 140 auf den Aussenmast 14, welcher aus dem Getriebegehäuse 10 heraus ragt, übertragen. Das Drehmoment vom Zahnradring 12 wird damit mittels Zahnradmitnehmer 140 auf den Aussenmast 14 übertragen.

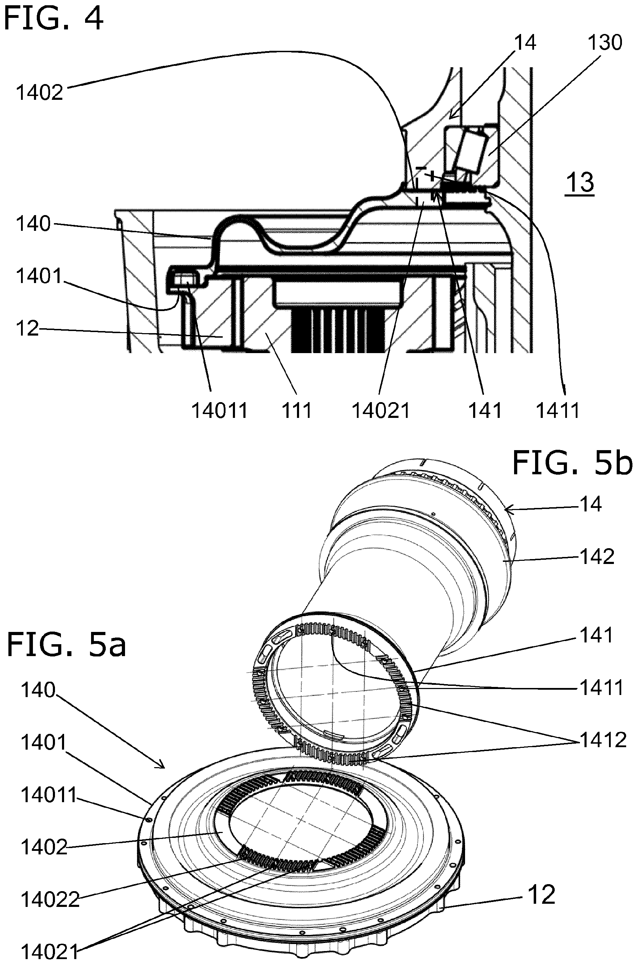

Der Aussenmast 14 weist einen Aussenmast-/Zahnradringflansch 141 und einen Rotorkoppelflansch 142 auf. In Figur 4 ist nochmals die Befestigung des Zahnradringmitnehmers 140 am Zahnradring 12 und am Aussenmast 14 im Detail gezeigt. Im Aussenflansch 1401 des Zahnradringmitnehmers 140 ist wie in Fig.5a ersichtlich eine Mehrzahl von Durchgangslöchern 14011 eingeformt, wobei mittels passender die Durchgangslöcher 14011 querender Schrauben der Zahnradringmitnehmer 140 mit dem Aussenflansch 1401 an korrespondierenden Befestigungsmitteln (siehe Fig.2) des Zahnradrings 12 befestigbar ist und damit mitrotierbar lagerbar ist. Alternativ oder zusätzlich zu einer solchen Schraubverbindung zwischen Aussenflansch 1401 und Zahnradring 12 können die in Kontakt zu bringenden Flächen des Zahnradrings 12 und des Aussenflansches 1401 des Zahnradmitnehmers 140 jeweils mit einer zusätzlichen korrespondierenden Verzahnung bzw. Kreuzverzahnung versehen sein.

An der dem Aussenflansch 1401 abgewandten Seite ist ein Innenflansch 1402 am Zahnradringmitnehmer 140 angeformt, welcher eine Mehrzahl von Durchgangslöchern 14021 (gestrichelt angedeutet) aufweist. Mittels Schrauben, die die Durchgangslöcher 14021 und ausgesparte Sacklöcher 1411 (gestrichelt angedeutet) im Aussenmast-/Zahnradringflansch 141 queren, wird der Zahnradringmitnehmer 140 am Aussenmast 14 befestigt.

Wie Versuche gezeigt haben, kann die Drehmomentübertragung vom Zahnradring 12 bzw. dem Zahnradringmitnehmer 140 auf den Aussenmast 14 verbessert und gesichert werden. Dazu wird eine zusätzliche formschlüssige Verbindung zwischen Aussenmast-/Zahnradringflansch 141 und Innenflansch 1402 des Zahnradringmitnehmers 140 eingeführt. Dazu werden die in Kontakt zu bringenden Flächen des Aussenmast-/Zahnradringflansches 141 und des Innenflansches 1402 jeweils mit einer zusätzlichen korrespondierenden Verzahnung bzw. Kreuzverzahnung 1412; 14022 versehen. Die kreuzförmige Gestaltung ist durch Kreuze in den Figuren angedeutet. Die Verzahnungen weisen jeweils von den Flanschoberflächen weg und greifen ineinander formschlüssig ein, wenn Aussenmast-/Zahnradringflansch 141 und Innenflansch 1402 miteinander verschraubt werden. Neben einer grossflächigen Drehmomentübertragung durch Kontakt des Aussenmast-/Zahnradringflansches 141 mit dem Innenflansch 1402 des Zahnradringmitnehmers 140 sichert die Kreuzverzahnung beidseitig den Sitz der Kontaktflächen der Flansche.

Das hier gezeigte Helikoptergetriebe 1 weist vier ortsfeste rotierbare Planetenradträger 11 auf, dessen Planetenräder 111 den Zahnradring 12 zu rotieren vermögen. Hier sind sämtliche Radiallager 113, 130, 172, 151 in Form von Kegelrollenlagern ausgeführt. Insbesondere sollten die Planetenradträgerlager 113 in Form von Kegelrollenlagern ausgeführt sein, da dies zur Erreichung vergrösserter Wartungsintervalle bzw. Schmiermittelnachführintervalle führt.

Bevorzugt sind die Wälzkörper der Kegelrollenlager aus Keramik, insbesondere aus Siliciumnitrid oder Zirkondioxid hergestellt. Wie Versuche gezeigt haben muss die Schmierung weniger oft nachgeführt werden, wenn derartige Kegelrollenlager verwendet werden. Auch die Abnutzung der Kegelrollenlager war im Betrieb weniger stark.

Optional kann der Lagermast 13 ausserhalb des Getriebegehäuses 10 antriebsstrangseitig an der nicht dargestellten Helikoptertragstruktur befestigt werden. Dies ist möglich, da der Lagermast 13 orts- und drehfest verbleibt.

Durch die vollständige Hohlkörperausführung des Lagermastes 13 und des Aussenmastes 14 können eine Verkabelung und/oder Steuerstangen durch das Helikoptergetriebe 1 vollständig durchquerend durchgeführt werden. Damit ist eine kompaktere Bauart erreichbar.

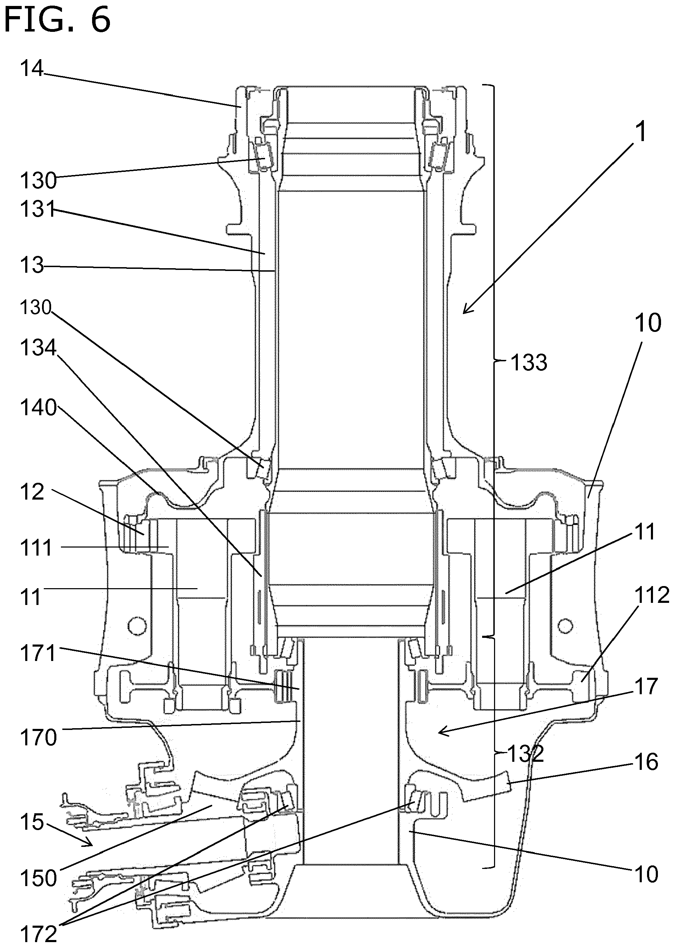

Gemäss einer weiteren bevorzugten Ausführungsform des erfindungsgemässen Rotormasts 2 kann auch der dem Rotormast 2 zugehörige Lagermast 13 zweiteilig ausgestaltet sein. Ein erstes Lagermastelement 132 ist antriebsstrangseitig angeordnet und das Lagermastelement 132 ist zumindest abschnittsweise von einem zweiten Lagermastelement 133 aufgenommen. Das erste Lagermastelement 132 kann als Getriebewelle aufgefasst werden, um welches das Antriebszahnrad 16 sowie das mit dem Antriebszahnrad 16 verbundene Sonnenrad 17 rotierbar gelagert ist. Wie in Fig.6 ersichtlich sind hier die Sonnenradlager 172 zwischen Getriebegehäuse 10 und Sonnenrad 17 angeordnet und dadurch das Sonnenrad 17 rotierbar um das Lagermastelement 132 des Lagermasts 13 gelagert. Das zweite Lagermastelement 133 des Lagermasts 13 ist hier von der Antriebsstrangseite in Richtung Rotorseite verjüngend ausgestaltet, wodurch während der Montage das zweite Lagermastelement 133 von der Antriebsstrangseite durch den zentrischen Hohlraum des Getriebegehäuses 10 in Richtung Rotorseite eingelassen wird. Im Weiteren ist hier das zweite Lagermastelement 133 im Wesentlichen durch ein formschlüssiges Tragelement 134 in Form einer Hülse im Getriebegehäuse 10 befestigbar.

Gemäss der hier in Fig.6 gezeigten, weiteren bevorzugten Ausführungsform ist beispielhaft der Aussenmast 14 und der Zahnradringmitnehmer 140 als ein einziges einstückiges Bauteil gefertigt.

### Bezugszeichenliste

1 Helikopterrotorgetriebe
   10 Getriebegehäuse
      100 Getriebegehäusebefestigung
      101 Gehäusedeckel
   11 Planetenradträger
   P Planetenradachse
      111 Planetenrad (Aussenzahnrad)
         1111 Aussenverzahnung
      112 Antriebsplanetenrad
      113 Planetenradträgerlager
   12 Zahnradring/ innenverzahntes Hohlrad
      120 Innenverzahnung
      121 Befestigungsmittel
   13 Lagermast (örtlich fix, nicht drehbar)
      130 Lager zwischen Lagermast und Aussenmast
      131 Hohlraum
      132 Erstes Lagermastelement
      133 Zweites Lagermastelement
      134 Formschlüssiges Tragelement
   14 Aussenmast
      140 Zahnradringmitnehmer
         1401 Aussenflansch
            14011 Durchgangslöcher
         1402 Innenflansch
            14021 Durchgangslöcher
            14022 Verzahnung
      141 Aussenmast-/Zahnradringflansch
         1411 Sackloch
         1412 Verzahnung
      142 Rotorkoppelflansch
   15 Antriebsstrang
      150 Antriebsstrangzahnrad
      151 Antriebsstranglager (Kugelgelagert)
   16 Antriebszahnrad (rotiert, örtlich fixiert, bewegt Zahnradring, Kegelrad)
   17 Sonnenrad (verbunden mit Antriebszahnrad)
      170 Rohrabschnitt
      171 Aussenverzahnung
      172 Sonnenradlager
2 Rotormast
Z zentrische Achse

## Patentansprüche

1. Rotormast (2) für einen Drehflügler, insbesondere Helikopter, welcher einen Aussenmast (14) aufweist, der drehfest mit einer Antriebseinheit eines Helikopterrotorgetriebes (1) koppelbar ist,
wobei der Rotormast (2) zweiteilig ausgestaltet ist und
einen Lagermast (13) sowie einen Aussenmast (14) umfasst,
wobei der Aussenmast (14) als Hohlkörper ausgestaltet rotierbar um eine zentrische Achse (Z) relativ zum Lagermast (13), den Lagermast (13) konzentrisch umgebend, gelagert ist,
und wobei der Aussenmast (14) mit dem Helikoptergetriebe (1) wirkverbindbar ist,
während der Lagermast (13) ortsfest und drehfest im Drehflügler lagerbar ist,
sodass der Aussenmast (14) drehfest mit einem Hauptrotor koppelbar ist und mit dem Helikopterrotorgetriebe (1) in Rotation versetzbar ist,
wobei der Lagermast (13) derart ausgestaltet und mit geeigneten Fixiermitteln versehen ist, damit der Lagermast (13) in einem zentralen Hohlraum des Helikopterrotorgetriebes (1) örtlich fixiert und drehgesichert angeordnet werden kann und der Lagermast (13), ein Getriebegehäuse (10) des Helikopterrotorgetriebes (1) mindestens teilweise in Richtung der zentrischen Achse (Z) durchsetzend, gehalten werden kann,
**dadurch gekennzeichnet, dass**
der Lagermast (13) von der Rotorseite in Richtung der dem Aussenmast (14) abgewandten Seite sich verjüngend ausgestaltet ist und mit geeigneten Fixiermitteln versehen ist, so dass der Lagermast (13) von der Rotorseite in den zentrischen Hohlraum des Getriebegehäuses (10) eingelassen und darin befestigt werden kann.

2. Rotormast (2) nach Patentanspruch 1,
**dadurch gekennzeichnet, dass** das Getriebegehäuse (10) vollständig durchquerbar gestaltet ist und der Lagermast (13) derart ausgestaltet und mit geeigneten Fixiermitteln versehen ist, damit der Lagermast (13), das Getriebegehäuse (10) des Helikopterrotorgetriebes (1) vollständig durchquerend, gehalten werden kann.

3. Rotormast (2) nach Patentanspruch 1,
**dadurch gekennzeichnet, dass**
der Lagermast (13) zweiteilig ausgestaltet ist umfassend ein erstes, antriebsstrangseitiges Lagermastelement (132) und ein zweites Lagermastelement (133).

4. Rotormast (2) nach Patentanspruch 3,
**dadurch gekennzeichnet, dass**
das zweite Lagermastelement (133) des Lagermasts (13) von der Antriebsstrangseite in Richtung der dem Aussenmast (14) zugewandten Seite sich verjüngend ausgestaltet ist und mit geeigneten Fixiermitteln versehen ist, so dass das zweite Lagermastelement (133) des Lagermasts (13) von der Antriebsstrangseite in den zentrischen Hohlraum des Getriebegehäuses (10) eingelassen und darin befestigt werden kann.

5. Rotormast (2) nach einem der vorherigen Patentansprüche,
**dadurch gekennzeichnet, dass**
der Lagermast (13) als Hohlkörper ausgestaltet ist, sodass Bauteile, wie Steuerstangen und/oder Verkabelung, den Lagermast (13) und den Aussenmast (14) in Richtung zentrischer Achse (Z) vollständig durchquerend anordbar ist.

6. Rotormast (2) nach einem der vorherigen Patentansprüche,
**dadurch gekennzeichnet, dass**
der Rotormast (2) und das Helikopterrotorgetriebe (1) derart ausgestaltet und wirkverbunden sind, dass der Rotormast (2) mit der als Antriebszahnrad (16) ausgestalteten Antriebseinheit drehfest koppelbar ist, wobei das Antriebszahnrad (16) auf dem Lagermast (13) rotierbar lagerbar ist mittels mindestens eines Radiallagers, und mittels eines mit dem Antriebszahnrad (16) drehfest verbundenen Sonnenrads (17) eine Rotation von mindestens einem Antriebsplanetenrad (112) an einer dem Antriebszahnrad (16)zugewandten Seite eines jeweiligen Planetenradträgers (11) um eine jeweilige Planetenradachse (P) erreichbar ist, und wobei mindestens ein, dem mindestens einen Antriebsplanetenrad (112) zugehöriges, ortsfest gelagertes Planetenrad (111) von einem um die zentrische Achse (Z) rotierbaren, innenverzahnten Zahnradring (12) umschlossen ist und zwischen Zahnradring (12) und dem Aussenmast (14) eine Kraftübertragungseinrichtung derart anbringbar oder angeformt ist, so dass ausgehend von einer Rotationsbewegung des Antriebszahnrads (16) der Aussenmast (14) und der mit dem Aussenmast (14) drehfest gekoppelte Hauptrotor in Rotation versetzbar ist.

7. Rotormast (2) nach Patentanspruch 6,
**dadurch gekennzeichnet, dass**
die Kraftübertragungseinrichtung durch einen am Zahnradring (12) und am Aussenmast (14) anbringbaren, insbesondere als ringförmiges Bauteil ausgebildeten, Zahnradringmitnehmer (140) ausgebildet ist.

8. Rotormast (2) nach Patentanspruch 7,
**dadurch gekennzeichnet, dass**
der Aussenmast (14) einem Aussenmast-/ Zahnradringflansch (141) umfasst und derart ausgestaltet ist, so dass Aussenmast (14) mittels eines Innenflansches (1402) am Zahnradringmitnehmer (140) und im Weiteren mittels eines Aussenflansches (1401) am Zahnradring (12) befestigbar ist.

9. Rotormast (2) nach Patentanspruch 8,
**dadurch gekennzeichnet, dass**
die in Kontakt zu bringenden Flächen des Aussenmast-/Zahnradringflansches (141) und des Innenflansches (1402) jeweils mit einer korrespondierenden Verzahnung bzw. Kreuzverzahnung (1412; 14022) versehen sind, wodurch eine formschlüssige Verbindung erreichbar ist.

10. Rotormast (2) nach Patentanspruch 6 oder 7,
**dadurch gekennzeichnet, dass**
der Zahnradringmitnehmer (140) an den Aussenmast (14) angeformt ist und dadurch ein einziges einstückiges Bauteil ausbildet, welches mittels eines Aussenflansches (1401) am Zahnradring (12) befestigbar ist.

11. Rotormast (2) nach einem der vorherigen Patentansprüche,
**dadurch gekennzeichnet, dass**
zwischen dem Lagermast (13) und dem Aussenmast (14) eine Vielzahl von Radiallagern (130) angeordnet sind, wobei die Radiallager (130) in Form von Kegelrollenlagern ausgeführt sind.

12. Rotormast (2) nach Patentanspruch 11,
**dadurch gekennzeichnet, dass**
die Wälzkörper der Kegelrollenlager aus Keramik, insbesondere aus Siliciumnitrid, Siliciumcarbid oder Zirkondioxid bestehen.

13. Drehflüger, insbesondere Helikopter, umfassend einen Rotormast (2) nach einem der vorherigen Patentansprüche.

## Claims

1. A rotor mast (2) for a rotorcraft, in particular a helicopter, which has an external mast (14) which can be coupled with a drive unit of a helicopter rotor transmission (1) in a rotationally fixed manner,
wherein the rotor mast (2) is configured to be in two parts and
comprises a bearing mast (13) and an external mast (14),
wherein the outer mast (14) configured as a hollow body is swivel-mounted around a centric axis (Z) relative to the bearing mast (13), thereby concentrically surrounding the bearing mast (13),
and wherein the external mast (14) is capable of being operatively connected to the helicopter transmission (1),
while the bearing mast (13) can be mounted in a locationally and rotationally fixed manner in the rotorcraft in such a way
that the external mast (14) can be coupled with a main rotor in a rotationally fixed manner and can be rotated with the helicopter rotor transmission (1),
wherein the bearing mast (13) is configured and provided with suitable fixing means such that the bearing mast (13) can be arranged in a locationally and rotationally fixed manner in a central cavity of the helicopter rotor transmission (1), and the bearing mast (13) can be held, at least partially passing through a transmission housing (10) of the helicopter rotor transmission (1) in the direction of the central axis (Z),
**characterised in that**
the bearing mast (13) is tapered from the rotor side in the direction of the side facing away from the outer mast (14), and is provided with suitable fixing means such that the bearing mast (13) can be inserted from the rotor side into the central cavity of the transmission housing (10) and can be fixed in the latter.

2. The rotor mast (2) according to patent claim 1,
**characterised in that**
the transmission housing (10) is configured to be capable of being completely passed through and the bearing mast (13) is configured in such a way and is and provided with suitable fixing means in order for the bearing mast (13) to be capable of being held, completely passing through the transmission housing (10) of the helicopter rotor transmission (1).

3. The rotor mast (2) according to patent claim 1,
**characterised in that**
the bearing mast (13) is configured to be in two parts, comprising a first, drive-train-side bearing mast element (132) and a second bearing mast element (133).

4. The rotor mast (2) according to patent claim 3,
**characterised in that**
the second bearing mast element (133) of the bearing mast (13) is configured so as to taper from the drive-train side in the direction of the side facing towards the outer mast (14), and is provided with suitable fixing means, such that the second bearing mast element (133) of the bearing mast (13) can be inserted from the drive-train side into the central cavity of the transmission housing (10) and can be fixed in the latter.

5. The rotor mast (2) according to one of the preceding patent claims,
**characterised in that**
the bearing mast (13) is configured as a hollow body, such that components, such as control rods and/or cabling, can be arranged passing completely through the bearing mast (13) and the outer mast (14) in the direction of a central axis (Z).

6. The rotor mast (2) according to one of the preceding patent claims,
**characterised in that**,
the rotor mast (2) and the helicopter rotor transmission (1) are configured and operatively connected in such a way that the rotor mast (2) can be can be coupled in a rotationally fixed manner with a drive unit configured as a drive gear (16), wherein the drive gear (16) can be rotatably mounted on the bearing mast (13) by means of at least one radial bearing, and, by means of a sun wheel (17) connected to the drive gear (16) in a rotationally fixed manner, a rotation of at least one planetary drive gear (112) on a side of a respective planetary gear carrier (11) facing towards the drive gear (16) about a respective planetary gear axis (P) can be achieved, and wherein at least one planetary gear (111), mounted in a fixed manner, associated with at least one planetary drive gear (112), is surrounded by an internally toothed gear ring (12), which can rotate about the central axis (Z), and a force transfer device can be attached, or moulded, between the gear ring (12) and the outer mast (14), such that, initiated by a rotational movement of the drive gear (16), the outer mast (14) and the main rotor, coupled with the outer mast (14) in a rotationally fixed manner, can be set in rotation.

7. The rotor mast (2) according to patent claim 6,
**characterised in that**
the force transfer device is configured as a gear ring driver (140), in particular, one that is configured as an annular component, which can be attached to the gear ring (12) and the outer mast (14).

8. The rotor mast (2) according to patent claim 7,
**characterised in that**
the outer mast (14) comprises an outer mast/gear ring flange (141), is configured such that the outer mast (14) can be attached by means of an inner flange (1402) to the gear ring driver (140) and, furthermore, by means of an outer flange (1401) to the gear ring (12).

9. The rotor mast (2) according to patent claim 8,
**characterised in that**,
the surfaces of the outer mast/gear ring flange (141) and of the inner flange (1402), which are to be brought into contact, are each provided with corresponding toothing or cross-toothing (1412; 14022), whereby a form-fit connection can be achieved.

10. The rotor mast (2) according to patent claim 6 or 7,
**characterised in that**
the gear ring driver (140) is moulded onto the outer mast (14) and thus forms a single integral component, which by means of an outer flange (1401) can be attached to the gear ring (12).

11. The rotor mast (2) according to one of the preceding patent claims,
**characterised in that**
a plurality of radial bearings (130) are arranged between the bearing mast (13) and the outer mast (14), wherein the radial bearings (130) are embodied in the form of tapered roller bearings.

12. The rotor mast (2) according to patent claim 11,
**characterised in that**
the rolling elements of the tapered roller bearings are made from ceramic, in particular, from silicon nitride, silicon carbide, or zirconium dioxide.

13. A rotorcraft, in particular, a helicopter, comprising a rotor mast (2) in accordance with one of the preceding patent claims.

## Revendications

1. Mât de rotor (2) pour un giravion, en particulier un hélicoptère, lequel comporte un mât extérieur (14), qui peut être couplé solidaire en rotation à une unité d'entraînement d'une transmission de rotor d'hélicoptère (1),
sachant que le mât de rotor (2) est constitué en deux parties et
comprend un mât de support (13) ainsi qu'un mât extérieur (14),
sachant que le mât extérieur (14) constitué sous la forme d'un corps creux est logé pouvant tourner autour d'un axe centré (Z) par rapport au mât de support (13), entourant de façon concentrique le mât de support (13),
et sachant que le mât extérieur (14) peut être relié en fonctionnement à la transmission d'hélicoptère (1),
alors que le mât de support (13) peut être logé fixement et solidaire en rotation dans le giravion,
de telle manière que le mât extérieur (14) peut être couplé solidaire en rotation à un rotor principal et peut être mis en rotation avec la transmission de rotor d'hélicoptère (1),
sachant que le mât de support (13) est constitué et doté de moyens de fixation appropriés de manière que de ce fait le mât de support (13) peut être fixé localement et disposé de façon anti-rotation dans un espace creux central de la transmission de rotor d'hélicoptère (1) et le mât de support (13) peut être maintenu traversant un carter de transmission (10) de la transmission de rotor d'hélicoptère (1) au moins en parte en direction de l'axe centré (Z),
**caractérisé en ce que**
le mât de support (13) est constitué du côté rotor se rétrécissant en direction du côté opposé au mât extérieur (14) et est doté de moyens de fixation appropriés de telle manière que le mât de support (13) peut être introduit du côté rotor dans l'espace creux centré du carter de transmission (10) et y être fixé.

2. Mât de rotor (2) selon la revendication 1,
**caractérisé en ce que** le carter de transmission (10) est conçu complètement traversable et le mât de support (13) est constitué et doté de moyens de fixation de telle manière que le mât de support (13) peut être maintenu traversant complètement le carter de transmission (10) de la transmission de rotor d'hélicoptère (1).

3. Mât de rotor (2) selon la revendication 1,
**caractérisé en ce que**
le mât de support (13) est constitué en deux parties comprenant un premier élément de mât de support (132) du côté ligne de transmission et un deuxième élément de mât de support (133).

4. Mât de rotor (2) selon la revendication 3,
**caractérisé en ce que**
le deuxième élément de mât de support (133) du mât de support (13) est constitué se rétrécissant du côté de la ligne de transmission en direction du côté tourné vers le mât extérieur (14) et est doté de moyens de fixation appropriés de telle manière que le deuxième élément de mât de support (133) du mât de support (13) peut être introduit du côté ligne de transmission dans l'espace creux centré du carter de transmission (10) et y être fixé.

5. Mât de rotor (2) selon l'une quelconque des revendications précédentes,
**caractérisé en ce que**
le mât de support (13) est constitué sous la forme d'un corps creux de telle manière que des composants, comme des barres de commande et/ou du câblage peuvent être disposés traversant complètement le mât de support (13) et le mât extérieur (14) en direction de l'axe centré (Z).

6. Mât de rotor (2) selon l'une quelconque des revendications précédentes,
**caractérisé en ce que**
le mât de rotor (2) et la transmission de rotor d'hélicoptère (1) sont constitués et reliés en fonctionnement de telle manière que le mât de rotor (2) peut être couplé solidaire en rotation à l'unité d'entraînement constituée sous la forme d'un engrenage d'entraînement (16), sachant que l'engrenage d'entraînement (16) peut être logé pouvant tourner sur le mât de support (13) au moyen d'au moins un roulement radial et au moyen d'un engrenage planétaire (17) relié solidaire en rotation à l'engrenage d'entraînement (16), une rotation d'au moins un engrenage planétaire d'entraînement (112) sur un côté tourné vers l'engrenage d'entraînement (16) d'un support d'engrenage planétaire (11) respectif peut être obtenue autour d'un axe d'engrenage planétaire (P) respectif et sachant qu'au moins un engrenage planétaire (111) logé fixement, correspondant à un engrenage planétaire d'entraînement (112) est entouré par une couronne dentée (12) à denture intérieure, pouvant tourner autour de l'axe centré (Z) et qu'entre la couronne dentée (12) et le mât extérieur (14) un dispositif de transmission de force peut être monté ou conformé de telle manière qu'en partant d'un mouvement de rotation de l'engrenage d'entraînement (16), le mât extérieur (14) et le rotor principal couplés solidaires en rotation au mât extérieur (14) peuvent être mis en rotation.

7. Mât de rotor (2) selon la revendication 6,
**caractérisé en ce que**
le dispositif de transmission de force est constitué par un élément d'entraînement de couronne dentée (140) pouvant être monté sur la couronne dentée (12) et sur le mât extérieur (14), constitué en particulier comme un composant de forme annulaire.

8. Mât de rotor (2) selon la revendication 7,
**caractérisé en ce que**
le mât extérieur (14) comprend une bride mât extérieur/couronne dentée (141) et est constitué de telle manière que le mât extérieur (14) peut être fixé au moyen d'une bride intérieure (1402) sur l'élément d'entraînement de couronne dentée (140) et en plus au moyen d'une bride extérieure (1401) sur la couronne dentée (12).

9. Mât de rotor (2) selon la revendication 8,
**caractérisé en ce que**
les surfaces à mettre en contact de la bride mât extérieur/couronne dentée (141) et de la bride intérieure (1402) sont respectivement dotées d'une denture ou denture croisée correspondante (1412, 14022), permettant de ce fait d'obtenir un assemblage par conformité de forme.

10. Mât de rotor (2) selon la revendication 6 ou 7,
**caractérisé en ce que**
l'élé3.ment d'entraînement de couronne dentée (140) est conformé sur le mât extérieur (14) et constitue de ce fait un composant monobloc unique, lequel peut être fixé sur la couronne dentée (12) au moyen d'une bride extérieure (1401).

11. Mât de rotor (2) selon l'une quelconque des revendications précédentes,
**caractérisé en ce**
**qu'**entre le mât de support (13) et le mât extérieur (14) est disposée une pluralité de roulements radiaux (130), sachant que les roulements radiaux (130) sont exécutés sous la forme de roulements à galets coniques.

12. Mât de rotor (2) selon la revendication 11,
**caractérisé en ce que**
les corps de roulement des roulements à galets coniques sont composés de céramique, en particulier de nitrure de silicium, de carbure de silicium ou de dioxyde de zirconium.

13. Giravion, en particulier hélicoptère, comprenant un mât de rotor (2) selon l'une quelconque des revendications précédentes.
